# EUROPÄISCHE PATENTSCHRIFT

(11) **EP 0 394 526 B1**
(45) Veröffentlichungstag und Bekanntmachung des Hinweises auf die Patenterteilung: **30.06.1993**
(21) Anmeldenummer: 89107628.3
(22) Anmeldetag: 27.04.1989
(51) Int. Cl.: H02K 1/16, H02K 3/12

(54) **Drehfeldmaschine**
Rotating field machine
Machine à champ tournant

(43) Veröffentlichungstag der Anmeldung: 31.10.1990
(73) Patentinhaber: SIEMENS AKTIENGESELLSCHAFT, 80333 München (DE)
(72) Erfinder: Freise, Werner, Prof.Dr.-Ing., D-6750 Kaiserslautern (DE)

(56) Entgegenhaltungen:
- GB-A- 1 124 015
- US-A- 2 993 136

## Beschreibung

Die Erfindung bezieht sich auf eine Drehfeldmaschine gemäß Oberbegriff des Anspruchs 1; eine derartige Drehfeldmaschine ist z.B. durch die EP-B1-0 103 821 bekannt.

Drehfeldmaschinen der vorgenannten Art besitzen in der Regel einen ringförmigen Stator mit einem ringförmigen Joch und daran radial anschließenden, dem rotierenden Maschinenteil zugewandten Statorzähnen, zwischen denen Statornuten verbleiben, in die die Wicklungsstränge der Wicklung eingelegt werden. Die Stirnverbindungen der in den Statornuten liegenden Wicklungsstränge kreuzen sich, sobald die Zahl der Wicklungsstränge größer als 1 ist; durch die Kreuzungen der Stirnverbindungen der Wicklungsstränge kommt es zu großen, oft störenden axialen Ausladungen der Wickelköpfe.

Erfindungsgemäß läßt sich bei einer Drehfeldmaschine der eingangs genannten Art ohne Nachteile in baulicher oder elektrischer Hinsicht die axiale Baulänge in vorteilhafter Weise dadurch merklich mindern, daß die Statorzähne wechselweise nach links oder rechts gegenüber ihrer radialen Symmetrielinie schräggestellt sind. Die Wicklungsteile der Wicklungsstränge ordnen sich dadurch beim Wickeln selbsttätig vorwiegend jeweils in dem Nutteil mit der größeren Querschnittsbreite an und verteilen sich in weiterer Folge in radialer Richtung unterschiedlich, derart daß wegen der fehlenden Kreuzungsstellen die axiale Wickelkopflänge wesentlich reduziert werden kann. Bringt man nämlich bei einer derartigen Statorjochkonstruktion zunächst die Wicklungsspulen ein, die die Nuten mit dem breiteren Nutgrund belegen, dann können deren Stirnverbindungen ohne Schwierigkeit in eine vorwiegend nutgrundnahe Lage vor der Stirnfläche des Joches abgebogen werden, teilweise sogar radial oberhalb des Nutgrundes. Die Wicklungsspulen, die in die zur Nutöffnung hin breiteren Nuten zu liegen kommen, können dann anschließend derart eingebracht werden, daß ihre Stirnverbindungen weitgehend ohne Überdeckung der Wickelköpfe der zuerst eingebrachten Wicklungsspulen im Sinne einer geringen axialen Gesamtausladung verlegbar sind.

Durch die GB-A1-1 124 015 bzw. die US-A-2 993 136 sind zwar elektrische Maschinen mit einem Statorjoch bekannt, bei dem die Statorzähne zumindest teilweise eine von der radialen Symmetrielinie abweichende Orientierung aufweisen, jedoch beziehen sich diese Konstruktionen nicht auf Wicklungen mit einer Nutenzahl q = 1 je Strang und Pol und dienen sowohl einem anderen Zweck als weisen auch keine welchselweise nach links bzw. rechts schräggestellten Nuten mit welchselweise zum Nutgrund bzw. zur Neuöffnung querschnittsvergrößerten Nuten auf.

Die Erfindung wird im folgenden anhand einer schematischen Darstellung eines Ausschnittes eines Stators näher erläutert.

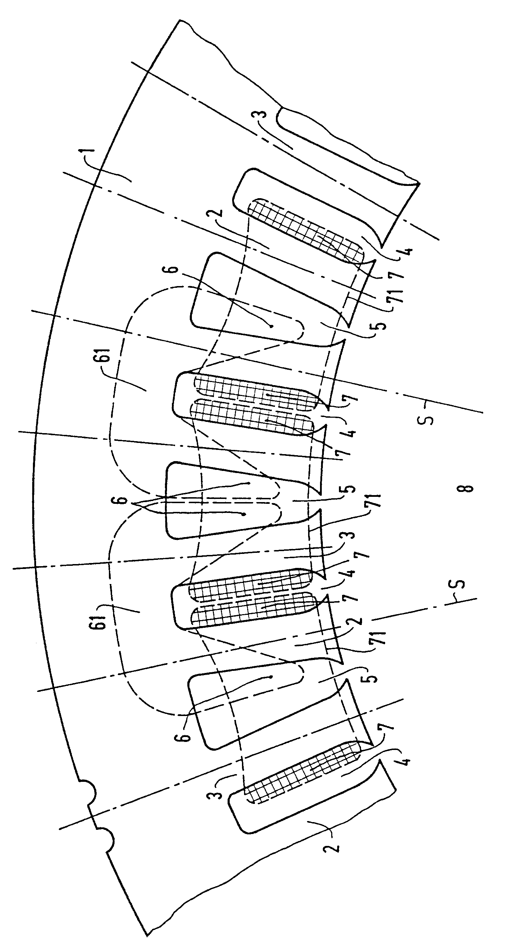

In einem Statorjoch 1 eines Innenläufermotors sind am Umfang der rotorseitigen Bohrung 8 mehrere durch Statorzähne 2,3 seitlich begrenzte Statornuten 4,5 eingestanzt. Erfindungsgemäß sind die Mittellinien der Statorzähne 2 bzw.3 wechselweise nach links oder rechts gegenüber der radialen Symmetrielinie S derart verdreht, daß sich in der Regel wechselweise zum Nutgrund bzw. zur Nutöffnung erweiternder Querschnittsbreiten der zwischen den Statorzähnen 2,3 liegenden Statornuten 4,5 ergeben. Wie aus FIG 1 ersichtlich, sind die Statornuten 4 jeweils in Richtung zur Bohrung 8 gerichteter Nutöffnung verbreitert und die Statornuten 5 jeweils zum Nutgrund hin erweitert. Die Statorzähne 2,3 sind - insbesondere an ihren bohrungsseitigen Enden - zweckmäßigerweise so ausgebildet, daß am Bohrungsumfang eine gleichmäßige Zahnkopfeinteilung entsteht.

In einem Teil der Nuten ist zur Verdeutlichung der erfindungsgemäß erzielbaren vorteilhaften Verlegbarkeit der Stirnverbindungen eine erste Wicklungsspule mit ihren Spulenseiten 6 in die Nuten 5 mit am Nutgrund vergrößertem Querschnitt und eine zweite Wicklungsspule mit ihren Spulenseiten 7 in die Nuten 4 mit an der Nutöffnung vergrößertem Querschnitt eingebracht. Aus den schematisch angedeuteten Verläufen der Stirnkopfverbindungen ist ersichtlich, daß sich die Stirnverbindungen 61 des erstgenannten Wicklungsstranges im wesentlichen auf einem größeren Durchmesser als die Stirnverbindungen 71 des nachgenannten Wicklungsstranges befinden, so daß sich eine Kreuzung der Stirnverbindungen 61 mit den Stirnverbindungen 71 - zumindest zu einem wesentlichen Teil - vermeiden läßt, wodurch sich eine geringere axiale Gesamtausladung der Stirnverbindungen im Vergleich zu üblichen Jochschnitten mit in Richtung der Symmetrielinie S verlaufenden Statorzähnen ergibt.

Das Ausführungsbeispiel zeigt die Erfindung für einen Stator mit zugeordnetem Innenläufer; unter Anwendung der erfindungsgemäßen Prinzipien kann die gleiche vorteilhafte geringere axiale Baugröße auch bei Drehfeldmaschinen mit einem Innenstator und zugeordnetem Außenläufer erreicht werden.

Die gleichen Vorteile sind auch bei sektorförmigen Stator- oder Rotorbauweisen erzielbar; in diesem Fall kann durch wechselweises Zuordnen der Spulenseiten 6 bzw.7 in aufeinanderfolgenden Sektoren zu den Wicklungssträngen ein vollständig symmetrischer Wicklungsaufbau gewährleistet werden.

## Patentansprüche

1. Drehfeldmaschine mit am Umfang eines Statorjoches (1) in durch Statorzähne (2,3) getrennten Statornuten (4,5) untergebrachter Statorwicklung (Spulenseiten 6,7) der Wicklungsstrangzahl m=2 oder m=4 und der Nutenzahl je Pol und Strang q=1, **dadurch gekennzeichnet,** daß die Statorzähne (2 bzw.3) wechselweise nach links bzw. rechts gegenüber der radialen Symmetrielinie (S) im Sinne von sich wechselweise zum Nutgrund bzw. zur Nutöffnung vergrößernder Querschnittsbreite der Statornuten (4,5) schräggestellt sind.

2. Drehfeldmaschine nach Anspruch 1, **dadurch gekennzeichnet,** daß die Spulenseiten (6,7) der Wicklungsstränge vorwiegend in dem Nutteil mit der größeren Nutquerschnittsbreite untergebracht ist.

3. Drehfeldmaschine nach Anspruch 1 und/oder 2, **gekennzeichnet** durch zumindest einen Sektorstator im Sinne eines nur über einen Teilumfang mit Nuten, Zähnen und Wicklungsteilen belegten Stators.

4. Drehfeldmaschine nach einem der Ansprüche 1 bis 3, **gekennzeichnet** durch einen Außenstator mit zugeordnetem Innenläufer.

5. Drehfeldmaschine nach einem der Ansprüche 1 bis 3, **gekennzeichnet** durch einen Innenstator mit zugeordnetem Außenläufer.

6. Drehfeldmaschine nach zumindest einem der Ansprüche 1 bis 5, **gekennzeichnet** durch eine Zahnkopfausbildung der Statorzähne (2,3) im Sinne einer über den genuteten Bohrungsumfang gleichmäßigen Einteilung der Zahnkopfbreiten.

## Claims

1. Rotary field machine having a stator winding (coil sides 6, 7) accommodated on the periphery of a stator yoke (1) in stator slots (4, 5) separated by stator teeth (2, 3), the said stator winding having a number m=2 or m=4 of winding phases and a number q=1 of slots per pole and per phase, characterised in that the stator teeth (2 and 3 respectively) are inclined alternately to the left and to the right relative to the line (S) of radial symmetry in the sense of the cross-sectional width of the stator slots (4, 5), which increases alternately towards the slot base and towards the slot opening, respectively.

2. Rotary field machine according to claim 1, characterised in that the coil sides (6, 7) of the winding phases are accommodated mainly in the slot portion having the largest cross-sectional width of slot.

3. Rotary field machine according to claim 1 and/or 2, characterised by at least one sector stator, in the sense of a stator covered over only a partial periphery with slots, teeth and winding portions.

4. Rotary field machine according to one of claims 1 to 3, characterised by an external stator having an associated internal rotor.

5. Rotary field machine according to one of claims 1 to 3, characterised by an internal stator having an associated external rotor.

6. Rotary field machine according to at least one of claims 1 to 5, characterised by a tooth tip formation of the stator teeth (2, 3) in the sense of a uniform division of the tooth tip widths over the slotted periphery of the bore.

## Revendications

1. Machine à champ tournant comportant un enroulement statorique (côtés 6, 7 de la bobine) logé, sur la périphérie de la culasse (1) du stator, dans des encoches (4,5) du stator séparées par des dents (2,3), avec un nombre de faisceaux d'enroulement m=2 ou m=4 et un nombre d'encoches par pôle et par faisceau q=1, caractérisée par le fait que les dents (2 ou 3) du stator sont inclinées alternativement vers la gauche et vers la droite par rapport à l'axe radial de symétrie (S) de manière que la largeur en coupe transversale des encoches (4, 5) du stator augmente alternativement en direction du fond et de l'ouverture des encoches.

2. Machine à champ tournant suivant la revendication 1, caractérisée par le fait que les côtés (6, 7) de bobine des faisceaux d'enroulement sont logés en majeure partie dans la partie de l'encoche possédant la plus grande largeur en coupe transversale.

3. Machine à champ tournant suivant la revendication 1 et/ou 2, caractérisée par au moins un stator sectoriel c'est-à-dire un stator occupé uniquement sur une partie de sa circonférence par des encoches, des dents et des éléments d'enroulement.

4. Machine à champ tournant suivant l'une des revendications 1 à 3, caractérisée par un stator extérieur auquel est associé un rotor intérieur.

5. Machine à champ tournant suivant l'une des revendications 1, caractérisée par un stator intérieur auquel est associé un rotor extérieur.

6. Machine à champ tournant suivant au moins l'une des revendications 1 à 5, caractérisée par une réalisation des têtes des dents (2,3) du stator pour l'obtention d'une répartition des largeurs des têtes des dents, uniforme sur la circonférence rainurée de l'alésage.
